(19) Europäisches Patentamt
European Patent Office
Office européen des brevets

(11) **EP 3 579 392 A1**

(12) **EUROPÄISCHE PATENTANMELDUNG**

(43) Veröffentlichungstag:
**11.12.2019  Patentblatt 2019/50**

(51) Int Cl.:
***H02K 9/06*** *(2006.01)*

(21) Anmeldenummer: **19172779.1**

(22) Anmeldetag: **06.05.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **04.06.2018   DE 102018208706**

(71) Anmelder: **Audi AG**
**85045 Ingolstadt (DE)**

(72) Erfinder: **Schröder, Maximilian**
**85049 Ingolstadt (DE)**

(54) **SYSTEM ZUM KÜHLEN EINER ELEKTROMASCHINE**

(57)    Die Erfindung betrifft ein System zum Kühlen einer Elektromaschine, die zwei Komponenten aufweist, wobei eine der beiden Komponenten als Rotor (6) und die andere als Stator (8) ausgebildet ist, wobei die beiden Komponenten eine zentrale Achse der Elektromaschine koaxial umschließen, wobei sich der Rotor (6) bei einem Betrieb der Elektromaschine relativ zu dem Stator (8) dreht, wobei mindestens eine Komponente von mindestens einem axial orientierten Kanal (10) durchsetzt ist, wobei ein Ventilator (14) an einem ersten Ende des mindestens einen Kanals (10) angeordnet ist, wobei eine Turbine (16) an einem zweiten Ende des mindestens einen Kanals (10) angeordnet ist, wobei der Ventilator (14) dazu ausgebildet ist, Luft in Strömung zu versetzen, die von dem ersten Ende durch den mindestens einen axial orientierten Kanal (10) zu dem zweiten Ende strömt, wobei die Turbine (16) dazu ausgebildet ist, kinetische Energie der strömenden Luft in Rotationsenergie der als Rotor (6) ausgebildeten Komponente umzuwandeln.

Fig. 1

**Beschreibung**

Die Erfindung betrifft ein System zum Kühlen einer Elektromaschine, eine Elektromaschine und ein Verfahren zum Kühlen einer Elektromaschine.

Eine Kühlung eines Stators einer elektrischen Maschine erfolgt in der Regel über einen Wassermantel an einem Gehäuse der elektrischen Maschine. Weiterhin erfolgt eine Abfuhr von Wärme aus dem Rotor, die insbesondere bei rotorkritischen elektrischen Maschinen, bspw. Asynchronmaschinen und stromerregten Synchronmaschinen, von Bedeutung ist, entweder per Umluftkühlung oder durch eine sogenannte Innenkühlung, bspw. Hohlwellenkühlung oder Lanzenkühlung. Ein Konzept zur Realisierung der Umluftkühlung umfasst einen Ventilator, der an einer axialen Endscheibe angebracht ist und einen Austausch von Luft zwischen einem warmen axialen Ende des Rotors und kälteren Teilen des Gehäuses der elektrischen Maschine befördert. Ein anderes Konzept ist eine axiale Umluftförderung durch einen an einer axialen Stirnseite angebrachten Ventilator.

Beide beschriebenen Konzepte zur Umluftkühlung führen zu großen hydraulischen Verlusten innerhalb der strömenden Luft, was indirekt zu einer Minderung eines Wirkungsgrads der elektrischen Maschine führt. Selbiges gilt auch für eine Innenkühlung des Rotors mit Wasser oder Öl. Bei einer flüssigkeitsgekühlten Hohlwelle können sich zusätzlich zu hydraulischen Verlusten weitere signifikante Verluste der Leistung aufgrund eines Einsatzes von Gleitringdichtungen oder Radialwellendichtungen ergeben. Des weiteren wird durch die Rotorinnenkühlung trotz eines guten Wärmeübergangs an die Flüssigkeit eine Kühlung an einem Ort erzeugt, der sich relativ weit von einem Ort, an dem Wärme entsteht, befinden kann. Durch einen daraus resultierenden vergleichsweise langen Weg einer Wärmeleitung kann es zu sehr hohen Temperaturen in aktiven Teilen des Rotors kommen.

Eine elektrische Antriebsanordnung mit einem Elektromotor ist aus der Druckschrift DE 10 2010 017 222 A1 bekannt. Dabei ist an einer Stirnseite eines Gehäuses des Elektromotors eine Lüfteranordnung angeordnet, mit der Verlustwärme des Elektromotors abgeführt werden kann.

Die Druckschrift DE 10 2011 053 787 A1 beschreibt eine Propelleranordnung zum Erzeugen einer Fluidströmung, die eine Antriebsvorrichtung mit einem Rotor und einem Stator aufweist.

Ein Verfahren zur Kühlung eines Stators und eines Rotors eines Rohrturbinengenerators mit einem gasförmigen Kühlmedium in dem Rohrturbinengenerator mit einem fremdgetriebenen Ventilator ist aus der Druckschrift EP 2 030 308 B1 bekannt.

Vor diesem Hintergrund war es eine Aufgabe, eine Elektromaschine effektiv zu kühlen.

Diese Aufgabe wird durch ein System, eine Elektromaschine und ein Verfahren mit den Merkmalen der unabhängigen Patentansprüche gelöst. Ausführungsformen des Systems, der Elektromaschine und des Verfahrens gehen aus den abhängigen Patentansprüchen hervor.

Das erfindungsgemäße System ist zum Kühlen einer Elektromaschine ausgebildet, die zwei axialsymmetrische Komponenten in Form eines Rotors und eines Stators aufweist, wobei die beiden Komponenten eine zentrale Achse der Elektromaschine koaxial umschließen, wobei sich der Rotor bei einem Betrieb der Elektromaschine relativ zu dem Stator dreht. Mindestens eine der beiden Komponenten ist von mindestens einem axial bzw. parallel zu der und/oder entlang der zentralen Achse orientierten Kanal durchsetzt. Das System weist mindestens einen Ventilator und mindestens eine Turbine auf, wobei der mindestens eine Ventilator an einem ersten Ende des mindestens einen Kanals angeordnet ist. Die mindestens eine Turbine ist an einem zweiten Ende des mindestens einen Kanals angeordnet. Der mindestens eine Ventilator ist dazu ausgebildet, Luft in Strömung zu versetzen, die von dem ersten Ende durch den mindestens einen axial orientierten Kanal zu dem zweiten Ende strömt. Die mindestens eine Turbine ist dazu ausgebildet, kinetische Energie der strömenden Luft in Rotationsenergie der als Rotor ausgebildeten Komponente umzuwandeln.

Bei der Elektromaschine umschließt in Ausgestaltung die als Rotor ausgebildete innere Komponente eine zentrale axiale Welle, wobei der Rotor als innere Komponente wiederum von dem Stator als äußerer Komponente axial umschlossen ist. Dabei ist bspw. die innere Komponente von dem mindestens einen axial orientierten Kanal als Strömungskanal und/oder Kühlkanal durchsetzt.

In Ausgestaltung ist zumindest der Rotor oder nur der Rotor von dem mindestens einen axial orientierten Kanal durchsetzt. In der Regel sind mehrere axial orientierte Kanäle vorgesehen.

Das System ist in der Regel für eine Elektromaschine vorgesehen, bei der der Rotor als innere axiale Komponente von dem Stator als äußerer axialer Komponente umschlossen ist. In diesem Fall umschließt der Rotor als innere Komponente axial auch die zentrale Welle, wobei der Rotor mit der zentralen Welle üblicherweise direkt verbunden ist, wobei sich die zentrale Welle und der Rotor bei einem Betrieb der Elektromaschine relativ zu dem Stator um die zentrale Achse drehen. In der Regel sind der Rotor als innere Komponente und die zentrale Welle aneinander befestigt, wobei die zentrale Welle den Rotor zentral durchsetzt. Außerdem ist die mindestens eine Turbine mit dem Rotor mechanisch verbunden bzw. gekoppelt.

Alternativ ist es auch möglich, dass das System für eine Elektromaschine vorgesehen ist, bei der der Stator als innere Komponente von dem Rotor als äußerer Komponente axial umschlossen ist. Bei einer derartigen alternativen Ausgestaltung des Systems und der Elektromaschine umschließt der Stator als innere Komponente die zentrale Achse, wobei sich der Rotor als äußere Komponente um den Stator dreht. Allerdings ist es auch in diesem Fall möglich, dass die mindestens eine Turbine und der Rotor miteinander mechanisch verbunden bzw. gekoppelt sind. Hierbei ist der Rotor von dem mindestens einen Kanal, vorzugsweise von mehreren Kanälen, durchsetzt.

Weiterhin ist vorgesehen, dass die Elektromaschine als Bauteile Permanentmagnete und Elektromagnete aufweist, wobei jeder Elektromagnet eine Wicklung bzw. eine Spule aus Metall, bspw. Kupfer, aufweist, wobei zum Betrieb der Elektromaschine durch die bspw. aus Draht gebildete Wicklung bzw. Spule ein Strom geleitet wird. Dabei umfasst eine der beiden Komponenten, d. h. entweder die innere Komponente oder die äußere Komponente bzw. der Rotor oder der Stator, als Bauteile die Elektromagneten und die andere der beiden Komponenten, d. h. entweder die äußere Komponente oder die innere Komponente bzw. der Stator oder der Rotor, als Bauteile die Permanentmagneten. Während des Betriebs dreht sich die als Rotor ausgebildete Komponente relativ zu der als Stator ausgebildeten Komponente, so dass sich die Elektromagneten als Bauteile der einen der beiden Komponenten auch relativ zu den Permanentmagneten als Bauteile der anderen der beiden Komponenten drehen.

Üblicherweise weist die innere Komponente als Bauteile mehrere Elektromagnete oder Permanentmagnete auf, die in der Regel umlaufend um die zentrale Achse nebeneinander angeordnet sind, wobei der mindestens eine axial orientierte Kanal zwischen zwei unmittelbar benachbarten Bauteilen, d. h. Elektromagneten oder Permanentmagneten angeordnet ist. Dabei sind je zwei unmittelbar benachbarte Bauteile voneinander beabstandet und durch einen Spalt voneinander getrennt. Dabei durchsetzt der mindestens eine Kanal, in der Regel je ein Kanal, den Spalt zwischen den je zwei unmittelbar benachbarten Bauteilen. Je nach Definition ist es dabei auch möglich, dass der Spalt einem Kanal entspricht, bzw. dass der Kanal durch die beiden unmittelbar benachbarten Bauteile begrenzt bzw. gebildet ist. Weiterhin ist die zentrale Welle als massive Welle oder als hohle Welle bzw. Hohlwelle ausgebildet. Falls die zentrale Welle hohl ist, ist es ebenfalls möglich, dass diese ebenfalls von einem Kanal durchsetzt ist, durch den von dem Ventilator in Strömung versetzte Luft strömt. Da die innere Komponente die Welle umschließt, durchsetzt die Welle auch die innere Komponente, wobei ein durch die insbesondere hohle Welle führender Kanal auch die innere Komponente durchsetzt.

Die Leitschaufeln des Ventilators und/oder der Turbine können sich mit dem Rotor als innere Komponente und der zentralen Welle üblicherweise synchron drehen und somit automatisch angetrieben werden. Falls der Stator als innere Komponente von dem Rotor als äußerer Komponente umschlossen ist, ist hierzu vorgesehen, insbesondere die Leitschaufeln der Turbine mit dem Rotor als äußerer Komponente mechanisch zu verbinden bzw. zu koppeln. Die Leitschaufeln des Ventilators können auch unabhängig von dem Rotor sein.

In Ausgestaltung ist vorgesehen, dass die Turbine als Teil des Rotors, wenn dieser die innere Komponente darstellt, bzw. als Teil einer Geometrie des Rotors ausgebildet ist. Dabei ist die Turbine üblicherweise in eine Stirnscheibe bzw. Endscheibe des Rotors integriert. Üblicherweise ist an axialen Enden des Rotors jeweils eine derartige Stirnscheibe vorgesehen und weiterhin an den Enden der Bauteile, d. h. bspw. der Elektromagnete, des Rotors angeordnet und/oder angebracht. Hierbei ist es auch möglich, dass eine jeweilige Stirnscheibe an Enden eines Blechpakets eines jeweiligen Elektromagneten des Rotors angeordnet ist, wobei jeweils ein derartiges Blechpaket als Teil des jeweiligen Elektromagneten ausgebildet ist, wobei eine Wicklung eines derartigen Elektromagneten mindestens ein Blechpaket umschließt. Mit den Stirnscheiben ist bspw. ein Verspannen des Blechpakets und ein Führen der Wicklung bei einer Umlenkung von bspw. 180° oder 360° möglich. Ergänzend ist mit den Stirnscheiben auch ein Wuchten der inneren Komponente, bspw. des Rotors, möglich. Der Ventilator ist in der Regel auf einer Stirnseite des Rotors angeordnet, die der Stirnseite, in die die Turbine integriert ist, gegenüberliegt.

Außerdem ist vorgesehen, dass der Ventilator und die Turbine jeweils Leitschaufeln als Luftleitelemente aufweisen. Dabei sind Luftleitelemente des Ventilators dazu ausgebildet, die Luft in axialer Richtung, d. h. parallel zu der zentralen Achse durch den mindestens einen Kanal zu der Turbine am anderen Ende des Kanals bzw. zu der dem Ventilator gegenüberliegenden Stirnseite zu fördern. Luftleitelemente der Turbine werden durch anströmende Luft aus dem mindestens einen Kanal in Rotation versetzt. Die Luftleitelemente der Turbine und/oder des Ventilators sind je nach Konstruktion und/oder vorgesehenem Fertigungskonzept in eine jeweilige Stirnscheibe integriert.

Mit Luftleitelementen, bspw. Leitschaufeln, der Turbine wird aus der durch den mindestens einen Kanal strömenden Luft Rotationsenergie entnommen, wobei ein rotatorisch strömender Anteil dieser strömenden Luft in Ausgestaltung entgegen einer Rotationsrichtung der rotierenden Komponente bzw. des Rotors umgelenkt wird. Somit wird insgesamt ein mit Drall behafteter Anteil der strömenden Luft, die aus dem mindestens einen Kanal austritt, reduziert.

Bei einer Ausführungsform des Systems ist bspw. die innere Komponente von mehreren Kanälen für die strömende Luft durchsetzt, die um die zentrale Achse der inneren Komponente, die auch die zentrale Welle durchsetzt, regelmäßig und/oder symmetrisch verteilt sind. Falls die innere Komponente n Bauteile, bspw. n = 6, d. h. Elektromagneten oder Permanentmagneten aufweist, ist es möglich, dass die innere Komponente ebenfalls durch n Kanäle entsprechend der n Spalten, die zwischen den benachbarten n Bauteilen bzw. im Fall von Elektromagneten zwischen den benachbarten n Wicklungen gebildet werden, durchsetzt ist.

In Ausgestaltung sind die Luftleitelemente der Turbine und/oder des Ventilators mit der als Rotor ausgebildeten Komponente mechanisch verbunden und/oder gekoppelt. In der Regel sind die Luftleitelemente der Turbine und der Rotor miteinander fest bzw. starr verbunden.

Die Leitschaufeln des Ventilators sind dazu ausgebildet, die Luft in eine zu der zentralen Achse parallele bzw. axial gerichtete Strömung zu versetzen, die durch den axialen Kanal, bspw. Kühlkanal, strömen kann. Die axial fließende Luftströmung hat dabei in der Regel noch eine hohe Rotationsgeschwindigkeit (Drall), die, wenn der axiale Strom bzw. die axiale Strömung der Luft auf die an der gegenüberliegenden Seite des Kühlkanals angeordnete Turbine bzw. auf deren Leitschaufeln trifft, vorzugsweise vollständig, in Rotationsenergie des Rotors überführt wird.

Die erfindungsgemäße Elektromaschine weist als Komponenten einen Rotor und einen Stator und eine Ausführungsform des erfindungsgemäßen Systems auf.

In möglicher Ausgestaltung ist die Elektromaschine als Asynchronmaschine oder stromerregte Synchronmaschine ausgebildet. Die Elektromaschine ist entweder als Motor oder als Generator zu betreiben, wobei eine jeweilige Betriebsart der Elektromaschine für eine jeweilige Ausführungsform des Systems sowie des nachfolgend beschriebenen Verfahrens unerheblich ist, wobei das Verfahren unabhängig davon durchführbar ist, ob die Elektromaschine nun als Motor oder als Generator betrieben wird. Weiterhin ist es möglich, dass die Elektromaschine in einem bspw. als Kraftfahrzeug ausgebildeten Fahrzeug angeordnet und dazu ausgebildet ist, elektrische Energie zum Antreiben bzw. Fortbewegen des Fahrzeugs in mechanische Energie aber auch umgekehrt mechanische Energie in elektrische Energie umzuwandeln.

Das erfindungsgemäße Verfahren ist zum Kühlen einer Elektromaschine vorgesehen, die zwei zu einer zentralen Achse der Elektromaschine symmetrische Komponenten aufweist, wobei eine der beiden Komponenten als Rotor und die andere als Stator ausgebildet ist. Mindestens eine der beiden Komponenten wird bzw. ist von mindestens einem axial orientierten Kanal als Strömungskanal und/oder Kühlkanal durchsetzt. An einem ersten Ende des mindestens einen Kanals wird bzw. ist ein Ventilator angeordnet, wobei an einem zweiten Ende des mindestens einen Kanals eine Turbine angeordnet wird bzw. ist. Mit dem Ventilator wird Luft in Strömung versetzt, die von dem ersten Ende durch den mindestens einen axial orientierten Kanal zu dem zweiten Ende strömt. Mit der Turbine wird kinetische Energie der strömenden Luft, insbesondere Rotationsenergie der strömenden Luft, in Rotationsenergie der als Rotor ausgebildeten Komponente umgewandelt.

Mit dem vorgestellten Verfahren und dem vorgestellten System, wobei eine Ausführungsform des Verfahrens üblicherweise mit einer Ausführungsform des Systems durchgeführt wird, ist es möglich, eine bspw.

als elektrische Antriebsmaschine ausgebildete Elektromaschine besser zu kühlen. Dabei ist insbesondere der Rotor, aber je nach Ausgestaltung bzw. Bauart der Elektromaschine auch der Stator zu kühlen, wobei hierbei mit einer erfindungsgemäß vorgesehenen Kombination aus Ventilator und Turbine eine Kühlung durch Luft realisiert wird.

Ein mit dem Verfahren und/oder dem System realisierbares Kühlen bzw. eine entsprechende realisierbare Kühlung ist hinsichtlich einer Verlustleistung und somit hinsichtlich eines Wirkungsgrads, aber auch hinsichtlich der Kühlwirkung und somit hinsichtlich einer Dauerleistung eine optimierte Kühlung, bspw. eine optimierte Form einer Umluftkühlung, wobei die Luft in Ausgestaltung durch mehrere axiale Kanäle durch die innere Komponente, und ggf. auch durch die zentrale Welle, falls diese hohl ist, strömt.

Hierbei wird ein üblicherweise axialer Ventilator an einem axialen Ende und/oder einer axialen Seite, bspw. Stirnseite, der bspw. als Rotor ausgebildeten inneren Komponente positioniert, und eine bspw. axiale Turbine an einem gegenüberliegenden Ende bzw. auf einer gegenüberliegenden Seite, insbesondere Stirnseite, der bspw. als Rotor ausgebildeten inneren Komponente angeordnet. Dabei ist es möglich, den Ventilator und/oder die Turbine in eine jeweilige Seite bzw. Stirnseite des Rotors zu integrieren. Dabei ist vorgesehen, dass eine üblicherweise hohe Rotationsgeschwindigkeit bzw. ein Drall der axial strömenden Luft bzw. eines axial fließenden Luftmassenstroms von der Turbine in Rotationsenergie des Rotors überführt bzw. gewandelt wird. Hinsichtlich eines idealen hydraulischen Wirkungsgrads des Ventilators und der Turbine entsprechen etwaige zusätzliche Verluste aufgrund einer derartigen Kühlung, bspw. einer Umluftkühlung, lediglich Druckverlusten einer nicht rotierenden Strömung der Luft durch die axialen bzw. axial orientierten Kanäle, wobei derartige etwaige Verluste vergleichsweise gering sind. Auch unter Berücksichtigung eines real zu erreichenden Wirkungsgrads bieten das vorgestellte System und das vorgestellte Verfahren die Möglichkeit einer guten Kühlwirkung durch die Luft aufgrund einer vergleichsweise hohen axial orientierten Geschwindigkeit der durch die Kanäle strömenden Luft, was bei relativ geringer Erhöhung der Verlustleistung erreicht werden kann.

Somit ist mit dem Verfahren und dem System eine effiziente Kühlung mit vergleichsweise geringen etwaigen zusätzlichen hydraulischen Verlusten erzielbar. Weiterhin kann eine in der Regel aufwendige und fehleranfällige Kühlung der inneren Komponente durch eine Flüssigkeit entfallen. Im Vergleich zu gängigen Umsetzungen können somit Verluste, insbesondere bei hohen Drehzahlen der Elektromaschine, wesentlich reduziert werden.

Es ist in der Regel vorgesehen, dass die Leitschaufeln des Ventilators, bei dem es sich bspw. um einen Axialventilator handeln kann, und die Leitschaufeln der Turbine aufeinander abgestimmt sind. Luft, die von dem Ventilator angesaugt und wieder ausgeblasen wird, strömt axial durch den mindestens einen Kanal. Durch die Rotation der Leitschaufeln des Ventilators ist die ausgeblasene und durch den Kanal strömende Luft mit Drall behaftet. Die strömende Luft weist kinetische Energie auf, die einen Anteil axiale kinetische Energie aufgrund einer axialen Strömung der Luft und einen Anteil rotatorische kinetische Energie bzw. Rotationsenergie aufgrund des Dralls der Luft aufweist. Insbesondere diese Rotationsenergie als Anteil der kinetischen Energie wird von den Leitschaufeln der Turbine aufgrund ihrer Form in Rotationsenergie des Rotors gewandelt, so dass die Luft, wenn sie aus der Turbine austritt, im Wesentlichen nur noch ohne Drall axial strömt bzw. abströmt.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.

Figur 1 zeigt in schematischer Darstellung eine erste Ausführungsform der erfindungsgemäßen Elektromaschine und eine erste Ausführungsform des erfindungsgemäßen Systems bei Durchführung einer ersten Ausführungsform des erfindungsgemäßen Verfahrens.

Figur 2 zeigt in schematischer Darstellung ein Detail des Systems aus Figur 1.

Figur 3 zeigt in schematischer Darstellung ein Detail einer zweiten Ausführungsform der erfindungsgemäßen Elektromaschine und ein Detail einer zweiten Ausführungsform des erfindungsgemäßen Systems zur Durchführung einer zweiten Ausführungsform des erfindungsgemäßen Verfahrens.

Die Figuren werden zusammenhängend und übergreifend beschrieben. Gleichen Komponenten sind dieselben Bezugsziffern zugeordnet.

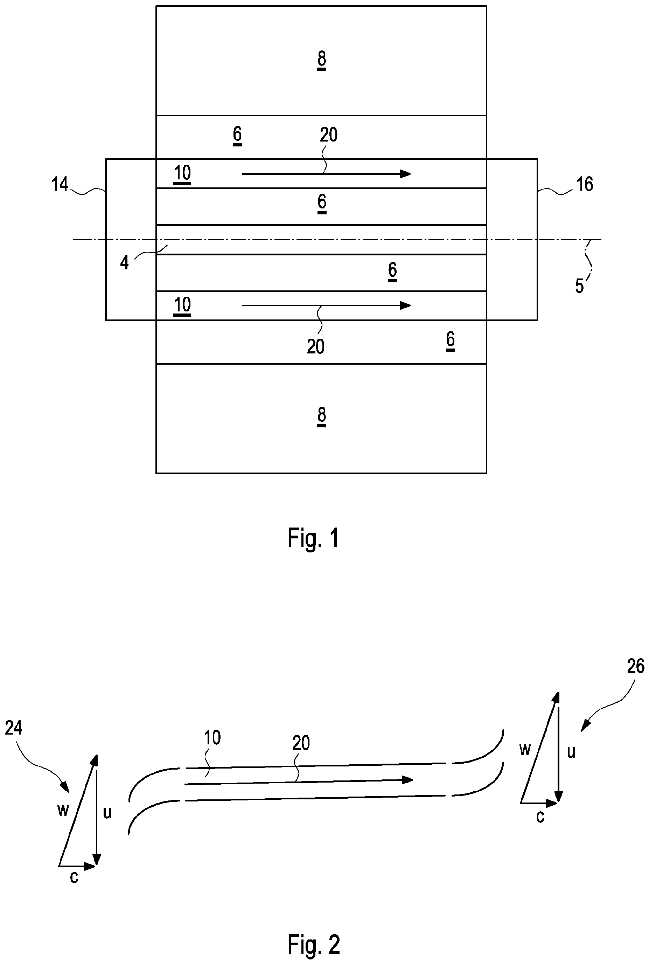

Die in Figur 1 schematisch dargestellte Ausführungsform der erfindungsgemäßen Elektromaschine weist hier eine zentrale Welle 4 und einen Rotor 6 als innere Komponente und einen Stator 8 als äußere Komponente auf. Dabei sind die Welle 4, der Rotor 6 und der Stator 8 koaxial zu einer zentralen Achse 5 der Elektromaschine angeordnet. Außerdem ist hier vorgesehen, dass den Rotor 6 hier mehrere axial orientierte Kanäle 10 durchsetzen, die um die Achse 5 regelmäßig verteilt angeordnet sind. Der Rotor 6 und die Welle 4 sind miteinander mechanisch fest verbunden.

Bei einem Betrieb der Elektromaschine dreht sich der Rotor 6 mit der Welle 4 relativ zu dem feststehenden Stator 8 innerhalb eines von dem Stator 8 umschlossenen zylinderförmigen Raums um die Achse 5.

Die Ausführungsform des erfindungsgemäßen Systems zum Kühlen der Elektromaschine ist dieser Elektromaschine zugeordnet, wobei die Elektromaschine je nach Definition das System aufweist. Dabei weist das System neben den axialen Kanälen 10 innerhalb des Rotors 6 einen Ventilator 14 und eine Turbine 16 auf.

Dabei ist hier vorgesehen, dass hier nicht weiter dargestellte Leitschaufeln als Luftleitelemente des Ventilators 14 mit dem Rotor 6 mechanisch gekoppelt und/oder verbunden sind. Außerdem sind hier nicht weiter dargestellte Leitschaufeln als Luftleitelemente der Turbine 16 mit dem Rotor 6 gekoppelt und/oder verbunden.

Bei der hier vorgestellten Ausführungsform des erfindungsgemäßen Verfahrens ist während einem Betrieb der Elektromaschine vorgesehen, dass Leitschaufeln des Ventilators 14 in Rotation versetzt werden, wobei durch die sich rotierenden bzw. drehenden Leitschaufeln des Ventilators 14 Luft von außen angesaugt und in axialer Richtung parallel zu der Achse 5 durch die Kanäle 10 gefördert wird, wobei die Luft durch die Kanäle 10 strömt, was hier durch Pfeile 20 angedeutet ist. Diese in axialer Richtung strömende Luft trifft auf Leitschaufeln der Turbine 16, die durch die strömende Luft ebenfalls in Rotation versetzt werden, wobei die kinetische Energie der strömenden Luft zunächst in Rotationsenergie der Turbine 16 bzw. der Leitschaufeln der Turbine 16 umgewandelt wird. Weiterhin wird diese Rotationsenergie der Turbine 16, insbesondere der Leitschaufeln der Turbine 16, in Rotationsenergie der als Rotor 6 ausgebildeten Komponenten umgewandelt.

Bei der Ausführungsform des Verfahrens wird die durch die Kanäle 10 strömende Luft von Luftleitelementen der Turbine 16 bzw. in der Turbine 16 entgegen einer Rotationsrichtung des Rotors 6 umgelenkt, wodurch von den Luftleitelementen der Turbine 16 aus der strömenden Luft Rotationsenergie entnommen wird. Somit wird in dem System ein mit Drall behafteter Anteil der strömenden Luft, die aus den Kanälen 10 austritt, reduziert. Bei der hier vorgestellten Ausführungsform des Verfahrens entspricht eine Drehzahl der Turbine 16 auch einer Drehzahl des Rotors 6, wobei sich der mit Drall behaftete Anteil der strömenden Luft wie der Rotor 6 dreht. Wird die strömende Luft bei Austritt entgegen der Drehrichtung umgelenkt, entstehen auf den Luftleitelementen der Turbine 16 Druckunterschiede, die eine Beschleunigung des Rotors 6 verursachen können.

Figur 2 zeigt als Detail aus Figur 1 einen axial orientierten Kanal 10 und den Pfeil 20, in dessen Richtung die Luft bei der Ausführungsform des Verfahrens durch den Kanal 10 in axialer Richtung strömt. Außerdem zeigt Figur 2 ein erstes Geschwindigkeitsdiagramm 24, das eine Funktionsweise der Leitschaufeln des Ventilators 14 beschreibt und eine zweites Geschwindigkeitsdiagramm 26, das eine Funktionsweise der Leitschaufeln der Turbine 16 beschreibt. Jedes der beiden Geschwindigkeitsdiagramme 24, 26 umfasst einen ersten Vektor u, der eine Umfangsgeschwindigkeit der Leitschaufeln des Ventilators 14 bzw. der Turbine 16 andeutet, einen zweiten Vektor w, der eine Relativgeschwindigkeit der Leitschaufeln des Ventilators 14 bzw. der Turbine 16 anzeigt, und einen dritten Vektor c, der eine Absolutgeschwindigkeit der Leitschaufeln des Ventilators 14 bzw. der Turbine 16 andeutet bzw. zeigt.

Hierbei ist vorgesehen, dass eine Auslegung des Ventilators 14, insbesondere seiner Leitschaufeln, und eine Auslegung der Turbine 16, insbesondere ihrer Leitschaufeln, aufeinander abgestimmt sind. Über eine derartige Abstimmung kann ein axialer Volumenstrom der Luft, die durch die axialen, üblicherweise rotierenden Kanäle 10 strömt, gesteuert werden. Bei einer derartigen Auslegung des Ventilators 14 und der Turbine 16 wird ein breites Band bzw. ein breiter Bereich für eine Drehzahl berücksichtigt, mit der die Elektromaschine betrieben wird. Dabei ist dieses Band für die Drehzahl durch eine maximal mögliche Drehzahl und ggf. durch eine minimal mögliche Drehzahl begrenzt. Hierbei wird berücksichtigt, dass bei höheren Drehzahlen eine verstärkte Kühlung benötigt wird. In diesem Fall ist es weiterhin möglich, den Ventilator 14 und die Turbine 16 auf eine hohe Drehzahl auszulegen. Bei einer geringeren Drehzahl der Elektromaschine ist eine geringere Förderwirkung, mit der die Luft ausgehend von dem Ventilator 14 durch die Kanäle 10 gefördert wird, in der Regel unkritisch und verlustseitig evtl. sogar vorteilhaft. Die Leitschaufeln des Ventilators 14 und der Turbine 16 sind hierbei jeweils in eine axiale Endscheibe bzw. Stirnscheibe des Rotors 6 integriert. Die Leitschaufeln des Ventilators 14 und/oder der Turbine 16 sind so ausgelegt, dass in einer Abströmung der strömenden Luft aus der Elektromaschine im Wesentlichen reine axiale Strömungskomponenten vorhanden sind.

Eine Drehzahl bzw. Drehgeschwindigkeit bzw. Rotationsgeschwindigkeit der hier als Leitschaufeln ausgebildeten Leitelemente der Turbine 16 entspricht der Drehgeschwindigkeit des Rotors 6. Dabei ist es bspw. möglich, dass die Luftleitelemente der Turbine 16 je nach Definition als Teile des Rotors 6 ausgebildet sind. Eine Form der Luftleitelemente ist abhängig von Betriebsparametern des Systems einstellbar bzw. wählbar und hängt bspw. von einem vorgesehenen axialen Strom bzw. Volumenstrom der Luft als Fluid durch die Kanäle 10 und der Drehzahl ab, wobei derartige Betriebsparameter Eintrittswinkel und Austrittswinkel der Luftleitelemente definieren. Hierbei wird in Ausgestaltung bspw. nachfolgend angegebene Eulersche Turbinengleichung verwendet:

$$Y = v_2 * c_{v2} - v_1 * c_{v1}$$

Dabei ist Y eine spezifische Arbeit der Luftleitelemente, d. h. die spezifische Schaufelarbeit bzw. Leitschaufelarbeit. $v_1$ ist die Umfangsgeschwindigkeit eines sich drehenden Luftleitelements an einem Eintritt der Turbine und $v_2$ die Umfangsgeschwindigkeit an einem Austritt der Turbine 16. $c_{v1}$ ist eine Umfangskomponente einer Fluidgeschwindigkeit am Eintritt der Turbine 16 und $c_{v2}$ die Umfangskomponente der Fluidgeschwindigkeit am Austritt der Turbine 16. Bei einer idealen drallfreien Strömung bzw. Abströmung der Luft wird $c_{v2} = 0$, wodurch sich eine größere negative spezifische Schaufelarbeit Y ergibt. Falls die Schaufelarbeit Y negativ ist, wird von der Turbine 16 auf den Rotor 6 ein beschleunigendes Drehmoment übertragen.

Mit dem vorgestellten System ist es möglich, durch die bspw. in den Rotor 6 integrierte Turbine 16 kinetische Energie der mit Drall behafteten Luft, die durch die Kanäle 10 und den Rotor 6 strömt, zurückzugewinnen und in Rotationsenergie für den Rotor 6 zu wandeln. Durch Auslegung der Leitschaufeln des Ventilators 14 und der Leitschaufeln der Turbine 16 aufeinander wird für die durch den Kanal 10 strömende Luft, die mit Drall behaftet ist und somit Rotationsenergie aufweist, erreicht, dass aus der Turbine 16 abströmende bzw. ausströmende Luft nahezu drallfrei ist, da ihre Rotationsenergie in Rotationsenergie des Rotors 6 gewandelt wird.

Dabei wird ein Teil, bspw. 50 %, der vom Ventilator 14 verbrauchten Energie bzw. Leistung von der Turbine 16 zurückgewonnen, wodurch eine Effizienz einer Kühlung durch die Luft gesteigert wird. Dabei wird der strömenden Luft Drall entzogen und der Rotor 6 beschleunigt.

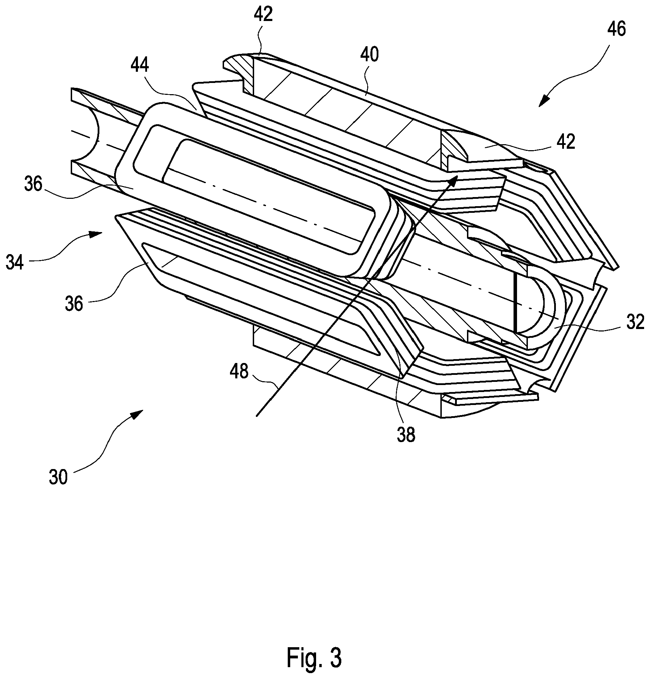

Das Detail der in Figur 3 gezeigten Elektromaschine 30 umfasst eine zentrale Welle 32, die von einem Rotor 34 als innerer Komponente der Elektromaschine 30 umschlossen ist. Dabei umfasst der Rotor 34 mehrere, hier sechs Bauteile, die als Elektromagneten 36 ausgebildet sind, wobei jeweils ein Elektromagnet 36 eine Wicklung 38 aus Kupfer aufweist. Außerdem ist bzw. sind der Rotor 34 bzw. dessen Elektromagneten 36 von einem Gehäuse 40 umschlossen, an dessen beiden axialen Enden jeweils eine Stirnscheibe 42 angeordnet ist. Figur 3 zeigt auch, dass jeweils zwei unmittelbar benachbarte Elektromagneten 36 voneinander beabstandet sind, wobei sich zwischen jeweils zwei unmittelbar benachbarten Elektromagneten 36 ein Spalt befindet, der als Kanal 44 der dritten Ausführungsform des erfindungsgemäßen Systems 46 ausgebildet ist und/oder genutzt wird. Insgesamt umfasst der Rotor 34 hier sechs Spalte zwischen den sechs Elektromagneten 36 und somit auch sechs Kanäle 44, die den Rotor 34 durchsetzen bzw. durchqueren. Zugunsten der besseren Übersichtlichkeit sind in Figur 3 eine Turbine und ein Ventilator als weitere Komponenten des Systems 46 nicht explizit dargestellt. Allerdings ist in Figur 3 durch einen Pfeil 48 eine mögliche Position eines Luftleitelements der Turbine oder des Ventilators angedeutet, wobei jeweils ein Luftleitelement, bspw. eine Luftleitschaufel, an dieser Position bzw. Stelle in den Abschnitt der Stirnscheibe 42 integriert ist. Dabei sind an einem ersten Ende des Rotors 34 bzw. an ersten Enden der Luftleitkanäle 44 Leitschaufeln des Ventilators und an entgegengesetzten zweiten Enden des Rotors 34 bzw. der Kanäle 44 Luftleitelemente der Turbine in die jeweilige Stirnscheibe 42 integriert. Sowohl die Kanäle 44 wie auch die in einer jeweiligen Stirnscheibe 42 integrierten Luftleitelemente der Turbine bzw. des Ventilators rotieren mit derselben Geschwindigkeit wie der Rotor 34. Da sie in dem Rotor 34 voll integriert sind, sind sie mit dem Rotor 34 mechanisch starr gekoppelt.

BEZUGSZIFFERN:

| 4 | Welle |
|---|---|
| 5 | Achse |
| 6 | Rotor |
| 8 | Stator |
| 10 | Kanal |
| 14 | Ventilator |
| 16 | Turbine |
| 20 | Pfeil |
| 24, 26 | Vektordiagramm |
| 30 | Elektromaschine |
| 32 | Welle |
| 34 | Rotor |
| 36 | Elektromagnet |
| 38 | Wicklung |
| 40 | Gehäuse |
| 42 | Stirnscheibe |
| 44 | Kanal |
| 46 | System |
| 48 | Pfeil |

**Patentansprüche**

1. System zum Kühlen einer Elektromaschine (30), die zwei Komponenten aufweist, wobei eine der beiden Komponenten als Rotor (6, 34) und die andere als Stator (8) ausgebildet ist, wobei die beiden Komponenten eine zentrale Achse der Elektromaschine (30) koaxial umschließen, wobei sich der Rotor (6, 34) bei einem Betrieb der Elektromaschine (30) relativ zu dem Stator (8) dreht, wobei mindestens eine Komponente von mindestens einem axial orientierten Kanal (10, 44) durchsetzt ist, wobei ein Ventilator (14) an einem ersten Ende des mindestens einen Kanals (10) angeordnet ist, wobei eine Turbine (16) an einem zweiten Ende des mindestens einen Kanals (10) angeordnet ist, wobei der Ventilator (14) dazu ausgebildet ist, Luft in Strömung zu versetzen, die von dem ersten Ende durch den mindestens einen axial orientierten Kanal (10, 44) zu dem zweiten Ende strömt, wobei die Turbine (16) dazu ausgebildet ist, kinetische Energie der strömenden Luft in Rotationsenergie der als Rotor (6, 34) ausgebildeten Komponente umzuwandeln.

2. System nach Anspruch 1, bei dem der Rotor (6, 34) von dem mindestens einen axial orientierten Kanal (10, 44) durchsetzt ist.

3. System Anspruch 1 oder 2, bei dem eine der beiden Komponenten als Bauteile mehrere Elektromagneten (36) aufweist, wobei der mindestens eine axial orientierte Kanal (10, 44) zwischen zwei unmittelbar benachbarten Elektromagneten (36) angeordnet ist.

4. System nach einem der voranstehenden Ansprüche, bei dem der Ventilator (14) und die Turbine (16) jeweils Luftleitelemente aufweisen, wobei die Luftleitelemente der Turbine (16) mit der als Rotor (6, 34) ausgebildeten Komponente verbunden sind.

5. System nach Anspruch 4, bei dem die Luftleitelemente der Turbine (16) in eine Stirnscheibe (42) integriert sind, die an einem Ende des Rotors (6, 34) angeordnet ist.

6. System nach einem der Ansprüche 4 oder 5, bei dem die Luftleitelemente des Ventilators (14) dazu ausgebildet sind, die Luft in eine axial gerichtete Strömung zu versetzen.

7. Elektromaschine, die einen Rotor (6, 34), einen Stator (8) und ein System nach einem der voranstehenden Ansprüche aufweist.

8. Verfahren zum Kühlen einer Elektromaschine (30), die zwei Komponenten aufweist, wobei eine der beiden Komponenten als Rotor (6, 34) und die andere als Stator (8) ausgebildet ist, wobei die beiden Komponenten eine zentrale Achse der Elektromaschine (30) koaxial umschließen, wobei sich der Rotor (6, 34) bei einem Betrieb der Elektromaschine (30) relativ zu dem Stator (8) dreht, wobei mindestens eine Komponente von mindestens einem axial orientierten Kanal (10, 44) durchsetzt wird, wobei an einem ersten Ende des mindestens einen Kanals (10, 44) ein Ventilator (14) angeordnet wird, wobei an einem zweiten Ende des mindestens einen Kanals (10, 44) eine Turbine (16) angeordnet wird, wobei von dem Ventilator (14) Luft in Strömung versetzt wird, die von dem ersten Ende durch den mindestens einen axial orientierten Kanal (10, 44) zu dem zweiten Ende strömt, wobei kinetische Energie der strömenden Luft von der Turbine (16) in Rotationsenergie der als Rotor (6, 34) ausgebildeten Komponente umgewandelt wird.

8

6          20

14          10 →          16

6

4

6

5

10 →

20          6

8

Fig. 1

26

24

w  u          10          20          w  u

c                                    c

Fig. 2

Fig. 3

Europäisches
Patentamt

European
Patent Office

Office européen
des brevets

# EUROPÄISCHER RECHERCHENBERICHT

Nummer der Anmeldung

EP 19 17 2779

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2006 042543 A (MATSUSHITA ELECTRIC IND CO LTD) 9. Februar 2006 (2006-02-09) * Zusammenfassung * * Abbildungen 1, 5, 7 * ----- | 1-8 | INV. H02K9/06 |
| A | FR 2 829 885 A1 (VALEO EQUIP ELECTR MOTEUR [FR]) 21. März 2003 (2003-03-21) * Ansprüche 1, 2 * * Abbildungen 8-13 * ----- | 1-8 | |
| A | WO 2016/184409 A1 (LUO LIFENG [CN]) 24. November 2016 (2016-11-24) * Zusammenfassung * * Abbildung 1 * ----- | 1-8 | |

RECHERCHIERTE
SACHGEBIETE (IPC)

H02K

Der vorliegende Recherchenbericht wurde für alle Patentansprüche erstellt

| Recherchenort | Abschlußdatum der Recherche | Prüfer |
|---|---|---|
| Den Haag | 25. Oktober 2019 | Maas, Erik |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

                                                                       
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 17 2779

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-10-2019

| Im Recherchenbericht angeführtes Patentdokument | Datum der Veröffentlichung | Mitglied(er) der Patentfamilie | | Datum der Veröffentlichung |
|---|---|---|---|---|
| JP 2006042543 A | 09-02-2006 | KEINE | | |
| FR 2829885 A1 | 21-03-2003 | FR | 2829885 A1 | 21-03-2003 |
| | | WO | 03026099 A1 | 27-03-2003 |
| WO 2016184409 A1 | 24-11-2016 | CN | 105888819 A | 24-08-2016 |
| | | CN | 105888847 A | 24-08-2016 |
| | | CN | 105889099 A | 24-08-2016 |
| | | CN | 105889324 A | 24-08-2016 |
| | | CN | 105889325 A | 24-08-2016 |
| | | CN | 105889326 A | 24-08-2016 |
| | | CN | 106026491 A | 12-10-2016 |
| | | CN | 205858478 U | 04-01-2017 |
| | | CN | 205858493 U | 04-01-2017 |
| | | CN | 205858731 U | 04-01-2017 |
| | | CN | 205858958 U | 04-01-2017 |
| | | CN | 205858959 U | 04-01-2017 |
| | | CN | 205858960 U | 04-01-2017 |
| | | CN | 205864142 U | 04-01-2017 |
| | | TW | 201704629 A | 01-02-2017 |
| | | TW | 201706496 A | 16-02-2017 |
| | | TW | 201711350 A | 16-03-2017 |
| | | WO | 2016184405 A1 | 24-11-2016 |
| | | WO | 2016184407 A1 | 24-11-2016 |
| | | WO | 2016184409 A1 | 24-11-2016 |
| | | WO | 2016184411 A1 | 24-11-2016 |
| | | WO | 2016184413 A1 | 24-11-2016 |
| | | WO | 2016184415 A1 | 24-11-2016 |
| | | WO | 2016184417 A1 | 24-11-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010017222 A1
- DE 102011053787 A1

- EP 2030308 B1